# EUROPÄISCHE PATENTSCHRIFT

(11) **EP 0 737 601 B1**
(45) Veröffentlichungstag und Bekanntmachung des Hinweises auf die Patenterteilung: **15.07.1998**
(21) Anmeldenummer: 96105614.0
(22) Anmeldetag: 10.04.1996
(51) Int. Cl.: B60R 7/02, B60P 7/14

(54) **Vorrichtung zum rutschfreien Transport von Gegenständen auf Ladeflächen von Kraftfahrzeugen**
Device to avoid the sliding of objects during transport on vehicle load platforms
Dispositif pour éviter le glissement des objets transportés sur des plate-formes de charge de véhicules

(30) Priorität: 13.04.1995 DE 29506079 U; 25.04.1995 DE 29506922 U
(43) Veröffentlichungstag der Anmeldung: 16.10.1996
(73) Patentinhaber: Schmidt, Ernst, 34628 Willingshausen (DE)
(72) Erfinder: Schmidt, Ernst, 34628 Willingshausen (DE)
(74) Vertreter: Freiherr von Schorlemer, Reinfried, Dipl.-Phys.

(56) Entgegenhaltungen:
- GB-A- 1 451 117
- GB-A- 2 112 333
- GB-A- 2 197 274

## Beschreibung

Die Erfindung betrifft eine Vorrichtung der im Oberbegriff des Anspruchs 1 angegebenen Gattung und ein Kraftfahrzeug nach dem Oberbegiff des Anspruchs 7.

Beim Fahren mit einem Kraftfahrzeug ergibt sich häufig das Problem, daß lose auf einer Ladefläche abgelegte Gegenstände mangels brauchbarer Befestigungsmöglichkeiten bei Brems- und Beschleunigungsmanövern oder bei Kurvenfahrten ungewollt hin-und herrutschen. Der Transport von schweren, scharfkantigen Gegenständen kann daher sogar zu Beschädigungen am Aufbau oder an Karroserieteilen des Kraffahrzeugs führen. In Verbindung mit Personenkraftwagen sind zwar zahlreiche, meistens kasten-oder taschenförmige Einsätze bekannt geworden (GB-A-21 12 333), die im Bereich des Kofferaums auf der Ladefläche oder an einem Seitenteil der Karosserie befestigt werden und zur Aufnahme loser Gegenstände dienen. Hierdurch kann jedoch das Problem von umherrutschenden oder sogar umherfliegenden Gegenständen nur teilweise gelöst werden. Dies gilt insbesondere dann, wenn größere und sperrige Gegenstände wie Reisetaschen, Koffer, Bierkästen oder dgl. zu transportieren sind, die den Kofferraum zwar auch nur teilweise ausfüllen, aber nicht in derartige Einsätze passen. In Fällen dieser Art läßt sich Abhilfe nur dadurch schaffen, daß das Ladegut umständlich mit Stricken, Gummibändern oder dgl. gesichert wird, sofern dafür überhaupt geeignete Befestigungspunkte vorhanden sind.

Daneben sind bei Eisenbahnwagen Vorrichtungen der eingangs bezeichneten Gattung bekannt (GB-A-14 51 117), bei denen das Halteelement mittels einer senkrecht zur Bewegungsrichtung angeordneten Gewindestange verschiebbar ist. Eine derartige Vorrichtung besitzt einen komplizierten Aufbau und ist bei beengten Raumverhältnissen, wie sie normalerweise in den Kofferräumen von Personenkraftwagen herrschen, nicht anwendbar.

Der Erfindung liegt daher die Aufgabe zugrunde, eine zur Montage auf der Ladefläche eines Kraftfahrzeugs geeignete Vorrichtung zu schaffen, die einen rutschfesten Transport insbesondere von größeren, sperrigen Gegenständen ermöglicht, ohne daß hierfür speziell angefertige Einsätze vorgesehen werden müssen.

Zur Lösung dieser Aufgabe dienen die kennzeichenden Merkmale der Ansprüche 1 und 7.

Weiter vorteilhafte Merkmale der Erfindung ergeben sich aus den Unteransprüchen.

Die Erfindung bringt vor allem den Vorteil mit sich, daß sich die Vorrichtung leicht an unterschiedlich große Gegenstände anpassen läßt, ohne dadurch den maximal nutzbaren Laderaum wesentlich zu reduzieren, und so ausgebildet werden kann, daß sie für eine Vielzahl von Kraftfahrzeugtypen geeignet ist.

Die Erfindung wird nachfolgend in Verbindung mit der beiliegenden Zeichung an einem Ausführungsbeispiel näher erläutert. Es zeigen:
Fig. 1 grob schematisch eine Draufsicht auf eine offene Ladefläche eines Personenkraftwagens, auf der eine erfindungsgemäße Vorrichtung montiert ist; und
Fig. 2 und 3 eine der Fig. 1 entsprechende Ansicht bei unterschiedlichen Transportsituationen.

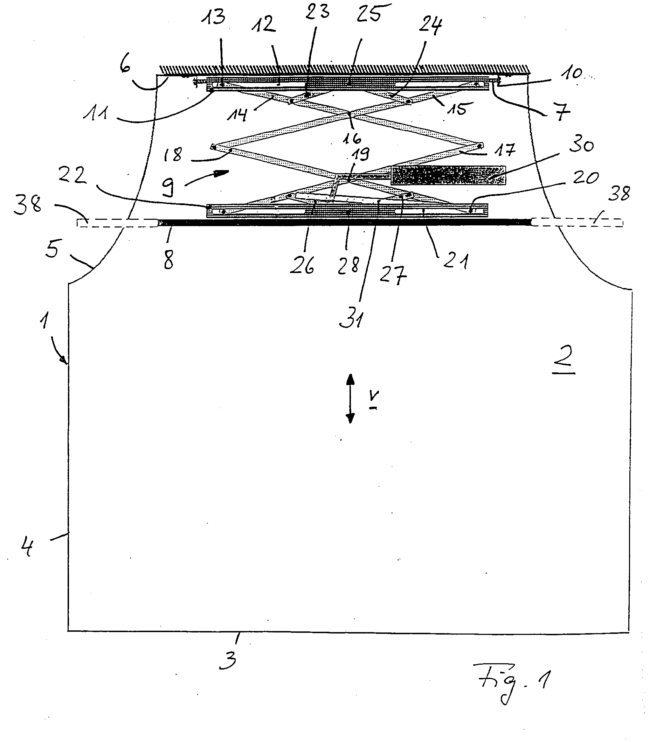

Fig. 1 zeigt schematisch den Grundriß eines Aufbaus bzw. einer Karosserie eines Personenkraftwagens im Bereich eines rückwärtigen Kofferraums 1, dessen Boden die Ladefläche 2 bildet. Am hinteren Ende des Kofferraums 1 befinden sich normalerweise eine mehr oder weniger hohe, vertikale Rück- bzw. Begrenzungswand 3 mit nicht dargestellten Rückleuchten und einer ebenfalls nicht dargestellten Stoßstange. An den Seiten wird der Kofferraum 1 normalerweise durch mehr oder weniger schräg und/oder parallel zueinander angeordnete Seiten- bzw. Begrenzungswände 4 begrenzt, die im vorderen Bereich häufig mit konkav gewölbten, erhaben in den Kofferraum 1 ragenden Wandteilen 5 versehen sind, die durch die Ausformung der Radkästen entstehen. Schließlich ist der Kofferraum 1 an seiner Vorderseite in der Regel durch eine im wesentlichen senkrecht zur Ladefläche 2 angeordnete Zwischen- bzw. Begrenzungswand 6 begrenzt, die auch durch die Rückseiten von Sitzen oder Sitzbänken gebildet sein kann. Dies hängt im Einzelfall von der Art des jeweiligen Fahrzeugtyps ab (Limosine, Coupé, Kombinationswagen bzw. Kombi, Pritschenaufbau usw.).

Erfindungsgemäß ist eine Vorrichtung (Fig. 1) vorgesehen, die dem Zweck dient, die Größe der Ladefläche 2 den Bedürfnissen des Einzelfalls anzupassen und zu transportierende Gegenstände rutschfest einzuspannen. Hierzu enthält die Vorrichtung ein zur Befestigung am Kraftfahrzeug dienendes Montageteil 7 und ein Halteelement 8, das z.B. aus einer im wesentlichen senkrecht zur Ladefläche 2 angeordneten Platte besteht. Das Halteelelement 8 ist mittels einer Einrichtung 9 in Richtung eines Doppelpfeils v verschiebar am Montageteil 7 gelagert. Es dient dem Zweck, den nutzbaren Teil des Kofferraums 1 zu verändern und gleichzeitig zu transportierende Gegenstände zu erfassen und festzulegen, damit sie bei der Fahrt mit dem Kraftfahrzeug nicht verrutschen können.

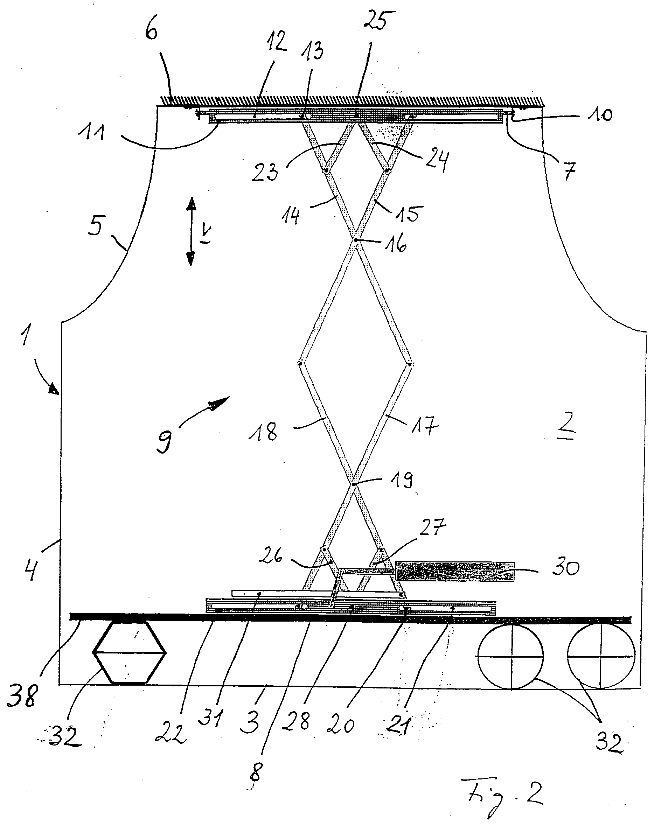

Nach Fig. 1 und 2 besteht die Einrichtung 9 aus einem scherengitterartigen Mechanismus. Dazu ist das Montageteil 7 im Ausführungsbeispiel mit Winkelstücken 10 an der Begrenzungswand 6 z.B. mit Schrauben befestigt. Das Montageteil 7 besteht im wesentlichen aus einer Führungsschiene 11, in der parallel zur Begrenzungswand 6 und parallel zur Ladefläche 2 verlaufende Langlöcher 12 ausgebildet sind. In diesen ist mit Gleitsitz je ein Gleitstück 13 verschiebar gelagert. An die Gleitstücke 13 ist je ein Hebel 14, 15 angelenkt. Die Hebel 14, 15 kreuzen sich in einem gemeinsamen, mittleren Gelenkpunkt 16 und sind an ihren freien Enden mit je einem weiteren Hebel 17, 18 gelenkig verbunden, wobei sich auch diese Hebel 17, 18 in einem gemeinsamen, mittleren Gelenkpunkt 19 kreuzen. Die freien Enden dieser Hebel 17, 18 sind mit Hilfe von weiteren, gelenkig an ihnen befestigten Gleitstücken 20 in Langlöchern 21 verschiebar geführt, die in einer der Führungsschiene 11 entsprechenden, am Halteelement 8 befestigten Führungsschiene 22 ausgebildet sind. Schließlich sind zwischen dem Gelenkpunkt 16 und den Gleitstücken 13 befindliche Teile der Hebel 14 und 15 durch weitere angelenkte Hebel 23, 24 gelenkig mit einem starren Gelenkpunkt 25 im Mittelteil der Führungsschiene 11 und entsprechende Hebel 26, 27 mit den Hebeln 17, 18 und einem starren, mittleren Gelenkpunkt 28 der Führungsschiene 22 verbunden. Dabei sind die Achsen aller Gelenkpunkte vorzugsweise senkrecht zur Ladefläche 2 und so angeordnet, daß die Hebel 14, 15, 17, 18, 23, 24, 26 und 27 im wesentlichen parallel zur Ladefläche 2 liegen und ein Scherengitter mit zwei gelenkig verbundenen Scheren bilden, mittels derer das Halteelement 8 in Richtung eines Doppelpfeil v bzw. im wesentlichen senkrecht zur Begrenzugswand 6 und zwischen dieser und der ihr gegenüberliegenden Begrenzugswand 3 hin- und hergeschoben werden kann. Zur Erleichterung dieses Vorgangs dient ein übertrieben groß dargestellter, an der Führungsschiene 22 oder dem Halteelement 8 befestigter Betätigungshebel 30. Zur Vermeidung unnötiger Belastungen des Montageteils 7 bzw. der Einrichtung 9 stützt sich außerdem das Halteelement 8 vorzugsweise in allen herstellbaren Positionen auf der Ladefläche 2 ab.

Die Fixierung der Lage des Halteelements 8 an einer vorgewählten Stelle erfolgt zweckmäßig mit einem gesonderten, an sich beliebigen Feststellmechanismus 31, der schematisch durch einen Verriegelungshebel angedeutet ist. Der Feststellmechanismus 31 besteht z.B. aus einem an den Hebel 18 angelenkten Hebel, der mittels einer Langlochführung mit dem Hebel 17 verbunden ist, wobei die Verbindung mittels einer das Langloch durchragenden Schraube und einer auf diese aufgeschraubten Flügelmutter erfolgt, die im festgedrehten Zustand die gerade eingestellte Lage des scherengitterartigen Mechanismus arretiert. Alternativ könnte eine derartige Schraube auch in einem der Gelenkpunkte 16, 19 oder dergleichen vorgesehen sein. Andere Möglichkeiten zur Feststellung bestehen z.B. darin, daß eines der Gleitstücke 13, 20 exzentrisch ausgebildet und im zugehörigen Langloch 12, 21 durch Klemmung festgelegt wird.

Das Halteelement 8 der beschriebenen Vorrichtung kann nach Fig. 1 in eine Position nahe der vorderen Begrenzungswand 6 bewegt werden, in der die maximale Ladefläche 2 erreicht ist, oder nach Fig. 2 eine Position nahe der rückwärtigen Begrenzungswand 3 einnehmen, die einer minimalen Ladefläche 2 entspricht. Dabei können zwischen der Begrenzungswand 3 und dem Halteelement 8 schematisch angedeutete Gegestände 32 engeklemmt werden, wodurch diese am Verrutschen während der Fahrt gehindert sind.

Gleichzeitig wäre es denkbar, den Raum innerhalb der Scheren für weitere Gegenstände, die nicht verrutschen sollen, zu nutzen.

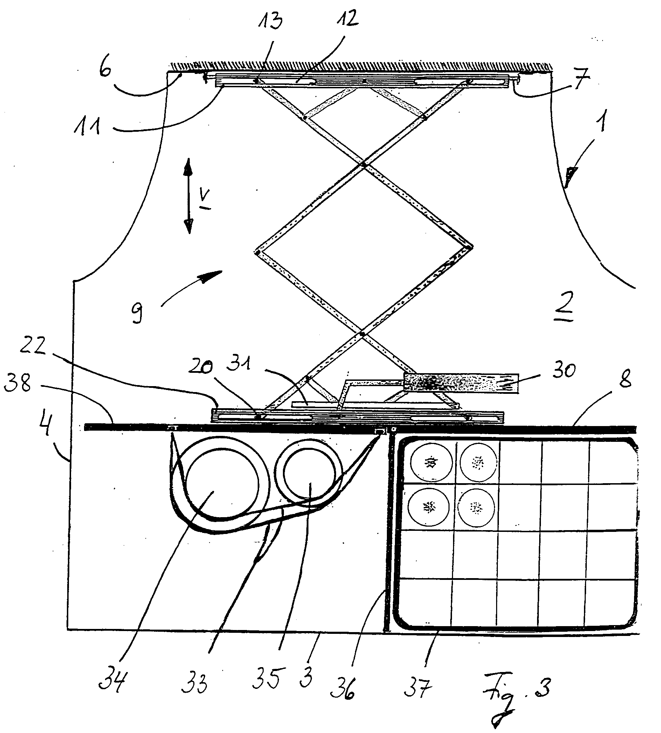

Fig. 3 zeigt, wie die erfindungsgemäße Vorrichtung weiter ausgestaltet werden kann. Dabei ist einerseits vorgesehen, an der Rückseite des Halteelements 8 flexible, vorzugsweise elastische Bänder 33 zu befestigen, um zwischen diesen und dem Halteelement 8 weitere Gegenstände, z.B. Flaschen 34, 35 rutschsicher anzuordnen. Weiter kann vorgesehen sein, an der Rückseite des Halteelements 8 wenigstens ein weiteres Halteelement 36 schwenkbar und ggf. feststellbar zu lagern, das z.B. in eine senkrecht zum Halteelement 8 angeordnete Stellung geschwenkt werden kann. Hierdurch wäre es möglich, bei nur teilweise zurückgezogenem Halteelement 8 einen Raum zur rutschfesten Aufnahme eines Gegenstands 37 in Form eines Bierkastens oder dgl. zu bilden.

Die Erfindung ist nicht auf das beschriebene Ausführungsbeispiel beschränkt, das sich auf vielfache Weise abwandeln läßt. Beispielsweise wäre es möglich, den Scherengittermechanismus mit mehr oder weniger als zwei Scheren zu versehen oder die Hebel 14, 15, 17, 18 mit Hilfe von Gleitbuchsen auf am Montageelement 7 befestigten Führungsstangen verschiebar zu lagern, in welchem Fall der Feststellmechanismus aus einer eine Gleitbuchse durchragenden Befestigungsschraube bestehen könnte. Nach einer bevorzugten Weiterbildung wird das Halteelement 8 außerdem mit seitlich ausziehbaren Rohren oder Platten (Fig. 1, 2) versehen, die im Bereich der Wandteile 5 in das Halteelement 8 zurückgeschoben und im übrigen Bereich des Kofferaums 1 entsprechend dem Abstand zwischen den Begrenzungswänden 4 aus dem Halteelement 8 herausgezogen werden können.

Im übrigen versteht sich, daß die Vorrichtung auch in umgekehrter Lage montiert, d.h. das Montageteil 7 an der Begrenzungswand 3 befestigt und das Halteelement 8 in Richtung der Begrenzungswand 6 verschiebar sein kann. In Abhängigkeit vom Einzelfall wäre es außerdem denkbar, das Montageteil 7 an einer seitlichen Begrenzungswand 4 zu befestigen und das Halteelement 8 quer zur Richtung des Doppelpfeils v zu verschieben. Dabei könnten das Montageteil 7 und das Halteelement 8 auch in Abhängigkeit vom Kraftfahrzeugtyp unterschiedlich gestaltet sein, während die Einrichtung 9 vorzugsweise für eine Vielzahl von Kraftfahrzeugtypen in unverändeter Form eingesetzt wird. Schließlich können auch andere als die dargestellten Feststellmechanismen vorgesehen werden, wobei eine Feststellmöglichkeit auch darin besteht, daß ein vergleichsweise schwergängiger Scherengittermechanismus verwendet wird, der die erforderliche Feststellkraft durch Reibung bzw. Klemmung aufbringt.

## Patentansprüche

1. Vorrichtung zur Befestigung an Kraftfahrzeugen mit Ladeflächen (2) zum rutschfreien Transport von Gegenständen (32, 37), enthaltend ein an einer Begrenzungswand (3,4,6) der Ladefläche (2) zu befestigendes Montageteil (7), ein Halteelement (8) und eine das Halteelement (8) mit dem Montageteil (7) verbindende Einrichtung (9) zur Hin-und Herverschiebung des Halteelements (8) relativ zum Montageteil (7) in einer im wesentlichen senkrecht zur Begrenzungswand (6) gerichteten Richtung, dadurch gekennzeichnet, daß die Einrichtung (9) einen scherengitterartigen Mechanismus enthält, dem ein Mittel zur Arretierung des Halteelements (8) in einer vorgewählten Stellung zugeordnet ist.

2. Vorrichtung nach Anspruch 1, dadurch gekennzeichnet, daß das Halteelement (8) aus einer senkrecht zur Ladefläche (2) angeordneten Platte besteht.

3. Vorrichtung nach Anspruch 1 oder 2, dadurch gekennzeichnet, daß dem Halteelement (8) ein Betätigungshebel (30) zugeordnet ist.

4. Vorrichtung nach einem der Ansprüche 1 bis 3, dadurch gekennzeichnet, daß das Halteelement (8) auf seiner von der Einrichtung (9) abgewanden Seite mit wenigstens einem weiteren, schwenkbar mit ihm verbundenen Halteelement (36) versehen ist.

5. Vorrichtung nach einem der Ansprüche 1 bis 4, dadurch gekennzeichnet, daß das Halteelement (8) auf seiner von der Einrichtung (9) abgewandten Seite mit Haltebändern (33) versehen ist.

6. Vorrichtung nach einem der Ansprüche 1 bis 5, dadurch gekennzeichnet, daß das Mittel aus einem Feststellmechanismus (31) besteht.

7. Kraftfahrzeug mit einer Ladefläche (2), die von Begrenzungswänden (3, 4, 6) umgeben ist, dadurch gekennzeichnet, daß der Ladefläche (2) eine Vorrichtung zum rutschfesten Transport von Gegenständen (32, 37) zugeordnet ist, die ein an einer Begrenzungswand (6) befestigtes Montageteil (7) und ein im wesentlichen senkrecht zur Begrenzungswand (6) verschiebar am Montageteil (7) gelagertes und in einer vorgewählten Position festlegbares Halteelement (8) enthält, wobei das Montageteil (7) und das Halteelement (8) durch einen scherengitterartigen Mechanismus (12 bis 28) miteinander verbunden sind.

## Claims

1. Apparatus for attachment to motor vehicles with load platforms (2) for transporting objects (32, 37) without slipping, including a mounting part (7) for attachment to a bounding wall (3, 4, 6) of the load surface (2), a retaining element (8) and a device (9) connecting the retaining element (8) to the mounting part (7), for moving the retaining element (8) to and fro relative to the mounting part (7) in a direction substantially perpendicular to the bounding wall (6), characterized in that the device (9) includes a lazy tongs mechanism, with which is associated means for arresting the retaining element (8) in a selected position.

2. Apparatus according to claim 1, characterized in that the retaining element (8) consists of a plate arranged perpendicular to the load platform (2).

3. Apparatus according to claim 1 or 2, characterized in that an actuating lever (30) is associated with the retaining element (8).

4. Apparatus according to any of claims 1 to 3, characterized in that the retaining element (8) is provided on its side opposite the device (9) with at least one further retaining element (36) pivotally attached thereto.

5. Apparatus according to any of claims 1 to 4, characterized in that the retaining element (8) is provided with retaining straps (33) on its side opposite the device (9).

6. Apparatus according to any of claims 1 to 5, characterized in that the means consists of a clamping mechanism (31).

7. A motor vehicle with a load platform (2) which is surrounded by bounding walls (3, 4, 6), characterized in that an apparatus for transporting objects (32, 37) without slipping is associated with the load platform (2) and includes a mounting part (7) fixed to one bounding wall (6) and a retaining element (8) which is mounted on the mounting part (7) for movement perpendicular to the bounding wall (6) and which can be fixed in a selected position, wherein the mounting part (7) and the retaining element (8) are connected together by a lazy tongs mechanism (12 to 28).

## Revendications

1. Dispositif de fixation sur des véhicules à plates-formes de chargement (2) pour le transport sans glissement d'objets (32, 37), comportant une pièce de montage (7) à fixer sur une paroi limite (3, 4, 6) de la plate-forme de chargement (2), un élément de retenue (8) et un dispositif (9) qui relie l'élément de retenue (8) à la pièce de montage (7) et qui sert au déplacement alterné de l'élément de retenue (8) par rapport à la pièce de montage (7) suivant une direction dirigée sensiblement perpendiculairement à la paroi limite (6), caractérisé en ce que le dispositif (9) comporte un mécanisme de type grillage à ciseaux auquel est adjoint un moyen d'arrêt de l'élément de retenue (8) dans une position présélectionnée.

2. Dispositif suivant la revendication 1, caractérisé en ce que l'élément de retenue (8) est constitué d'une plaque agencée perpendiculairement à la plate-forme de chargement (2).

3. Dispositif suivant l'une des revendications 1 et 2, caractérisé en ce qu'un lever d'actionnement (30) est adjoint à l'élément de retenue (8).

4. Dispositif suivant l'une des revendications 1 à 3, caractérisé en ce que l'élément de retenue (8) est, sur son côté tourné à l'opposé du dispositif (9), pourvu d'au moins un autre élément de retenue (36) relié à lui de manière à pouvoir pivoter.

5. Dispositif suivant l'une des revendications 1 à 4, caractérisé en ce que l'élément de retenue (8) est pourvu de bandes de fixation (33) sur son côté tourné à l'opposé du dispositif (9).

6. Dispositif suivant l'une des revendications 1 à 5, caractérisé en ce que le moyen est constitué d'un mécanisme de blocage (31).

7. Véhicule comportant une plate-forme de chargement (2), qui est entourée par des parois limites (3, 4, 6), caractérisé en ce qu'à la paroi de chargement (2) est adjoint un dispositif de transport sans glissement d'objets (32, 37) qui comporte une pièce de montage (7) fixée à une paroi limite (6) et un élément de retenue (8) qui est supporté sur la pièce de montage (7) de manière à pouvoir être déplacé sensiblement perpendiculairement à la paroi limite et qui peut être fixé dans une position présélectionnée, la pièce de montage (7) et l'élément de retenue (8) étant mutuellement reliés par un mécanisme de type grillage à ciseaux (12 à 28).
